# EUROPEAN PATENT SPECIFICATION

(11) **EP 2 761 175 B1**
(45) Date of publication and mention of the grant of the patent: **06.04.2016**
(21) Application number: 12762607.5
(22) Date of filing: 26.09.2012
(51) Int. Cl.: E04H 12/22, F03D 13/25

(54) **WIND GENERATOR COMPRISING A FLOATING SUPPORT PLATFORM**
WINDTURBINE MIT SCHWIMMENDER TRAGEPLATTFORM
ÉOLIENNE COMPRENANT UNE PLATEFORME DE SUPPORT FLOTTANTE

(30) Priority: 29.09.2011 IT GE20110108
(43) Date of publication of application: 06.08.2014
(73) Proprietor: Montalti, Mirko, 47025 Mercato Saraceno (Forlì Cesena) (IT)
(72) Inventor: Montalti, Mirko, 47025 Mercato Saraceno (Forlì Cesena) (IT)
(74) Representative: Porsia, Attilio
(86) International application number: PCT/EP2012/068906
(87) International publication number: WO 2013/045465

(56) References cited:
- WO-A1-02/068817
- WO-A1-2009/152400
- WO-A1-2011/006526
- WO-A2-2004/055272
- GB-A- 2 378 679
- GB-A- 2 451 191

## Description

The present invention relates to a wind generator comprising a floating support platform. As is known, systems for generating electric power based on the use of wind generators or wind towers are known. These systems generally comprise a vertical pillar of a certain height which supports a wind generator turbine comprising a certain number of blades rotating about a horizontal axis or, in some cases, vertical axis. These wind towers, in order to perform efficiently, must be situated in zones where the wind blows with a certain strength and where they will not create problems in terms of their visual impact on the surrounding landscape. At present research is being conducted into systems for supporting wind towers which allow them to be arranged out at sea where the wind often blows more strongly than on dry land and where they do not pose landscape-related problems. These supports envisage floating systems on which the wind towers are fixed. These systems are very bulky and are difficult to construct as well as having various limitations in terms of safety and efficiency; in fact, being floating systems, it should be possible to vary their position depending on the sea and wind conditions.

GB2378679A describes a known floating support structure for wind turbine comprising a watertight hull, a gravity or suction foundation comprising one or more components located on the seabed and one or more buoyancy devices connected to said watertight hull and configured to provide excess buoyancy and additional stability. The watertight hull and buoyancy device assembly is tethered to the foundation such that the excess buoyancy is manifested as a force in the tethers.

The object of the present invention is therefore to provide a wind generator comprising a support platform for wind towers which, by means of the use of suitable variable-position floating means, is able to ensure always an optimum efficiency and maximum safety even in particularly strong wind conditions or rough sea conditions.

This object is achieved with the present invention by means of a wind generator comprising a floating support platform according to Claim 1.

Other innovative features of the present wind generator form the subject of the dependent claims.

Further characteristic features and advantages of the present invention will be understood more clearly from the following description provided by way of a nonlimiting example with reference to the accompanying drawings in which:
- Fig. 1 shows a side elevation view of a wind tower provided with a floating support platform according to the present invention;
- Fig. 2 shows a partially sectioned and partial side elevation view of the support platform provided internally with a membrane tank in a rest position;
- Fig. 3 shows a partially sectioned plan view of the present support platform;
- Fig. 4 shows a partially sectioned plan view of a part of the support platform provided with means for preventing undesirable rotation about the vertical axis of the wind tower;
- Fig. 5 shows a partially sectioned and partial side elevation view of the support platform where the membrane tank is in the compressed position;
- Fig. 6 shows a partially sectioned, side elevation view of the support platform where the membrane tank is in the expanded position; and
- Fig. 7 is a schematic stability diagram which shows along the x-axis the inclination of the wind tower in degrees [°] with respect to a vertical axis and along the y-axis the righting moments and tilting moments [t*m].

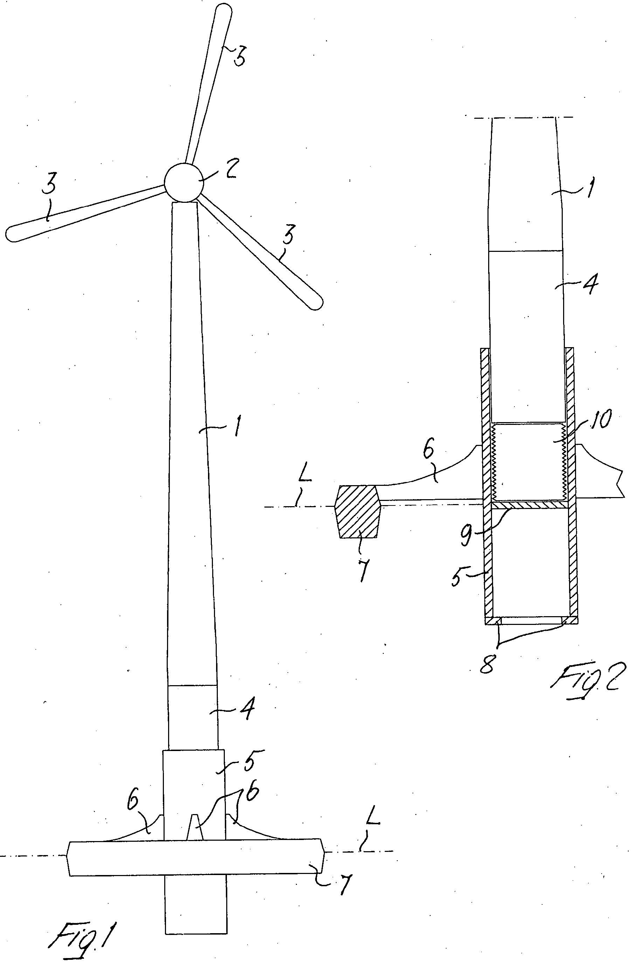

With reference to these accompanying drawings and with particular reference to Fig. 1 thereof, 1 denotes the vertical pillar of a turbine wind generator or wind tower 2 comprising a series of blades 3. This pillar 1 of the wind generator 2 comprises at the bottom a cylindrical section 4 engaging inside a cylindrical central body 5 of a support platform according to the present invention. This cylindrical central body 5 is connected by means of a series of radial elements 6 to a ring 7 which surrounds this cylindrical central body 5 and is designed to float in a water basin, for example the sea or a lake. As can be noted, this cylindrical central body 5 extends beyond the heightwise position of the ring 7 situated at the floating level L.

The cylindrical central body 5 is open both at the top end (see Fig. 2) for engagement of the final section 4 of the wind tower and at the bottom end, where it comprises an annular plate 8. A rigid disc 9 for supporting a membrane tank 10 containing, for example, compressed air and able to be compressed or expanded so as to move the pillar 1 of the wind tower downwards or upwards is positioned at a certain height of the cylindrical body 5. The rigid disc 9 is fixed to the membrane tank and may be positioned at various heights by means of suitable locking pins, not shown, along the central cylindrical body 5 of the platform. The bottom limit position of this rigid disc 9 is represented by the annular plate 8 against which this disc 9 rests. The floating ring 7 may be formed with a vertical cross-section of any desired shape; in this case the shape of the cross-section of this ring is hexagonal, but it could also be pentagonal, circular or another shape. In this first side view shown in Fig. 2 the membrane tank 10 is shown in a first condition where it is in an intermediate, normal working position. The wind tower 2 is in this case situated at the top dead-centre position and the pillar 1 is rigidly connected to the platform and supported by means for performing locking to the central cylindrical body 5. In this situation this membrane tank 10 is partially filled with air and remains in a rest position.

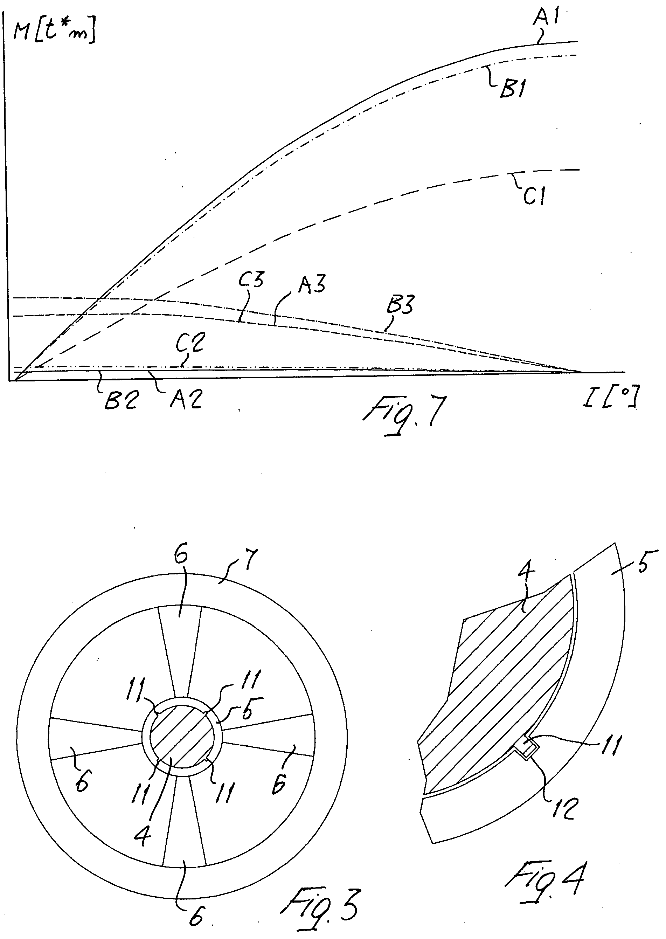

Fig. 3 shows a plan view of the present floating platform for supporting a wind tower. The floating ring 7 has a substantially circular shape, while the radial elements 6 which connect the cylindrical central body 5 to this floating ring 7 have the same length and are equidistant from each other. These radial elements 6 may consist of any number depending on the different application situations of the platform. As mentioned, the pillar of the wind tower may slide vertically upwards or downwards and the final section 4 for engagement in the central cylindrical body 5 is provided with suitable projecting ribs 11 (see also the enlarged view of Fig. 4) designed to engage inside corresponding vertical grooves 12 formed in the inner surface of the cylindrical central body 5. These ribs 11 housed inside these grooves 12 prevent any rotation of the pillar 1 of the wind tower with respect to the vertical axis along which this pillar 1 extends and the cylindrical section 4 engaging inside the cylindrical central body of the platform.

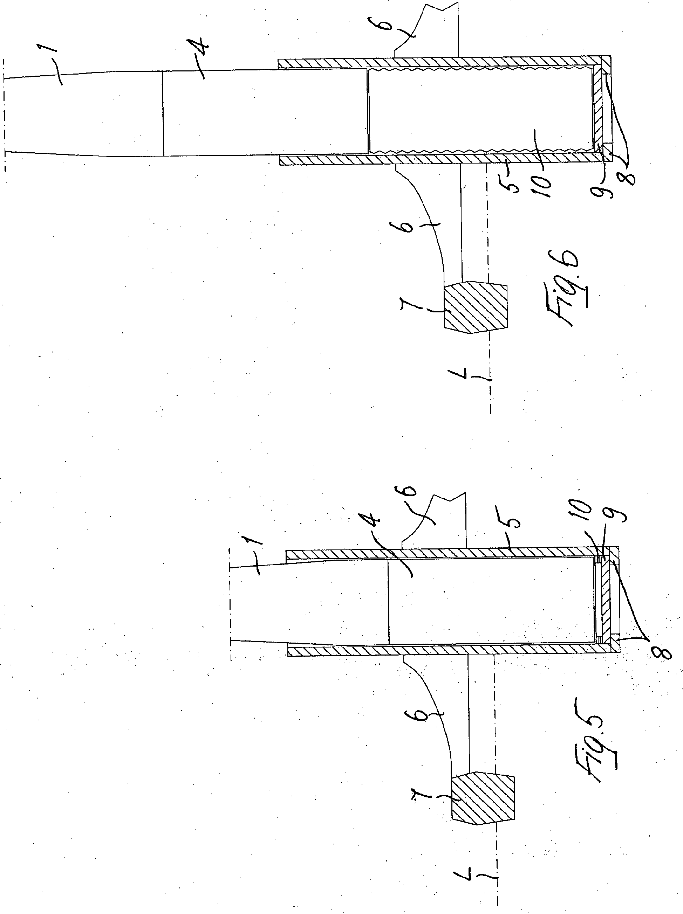

Fig. 5 shows a second condition of the present platform where the membrane tank 10 is completely deflated and the associated rigid support disc 9 bears against the annular plate 8 (cf. Figures 1 and 5 in this connection). This condition corresponds to a position of the wind tower completely lowered to the bottom dead-centre position, which may be used in those cases where maximum safety is required. This condition may be used during operation of the wind tower also in particularly strong wind conditions.

Fig. 6 shows a third condition of the present platform where the membrane tank 10 is completely inflated and expanded, while the associated support disc 9 is situated still bearing against the annular plate 8 situated at the bottom end of the cylindrical central body 5. This completely raised position of the wind tower is transitory and is used for installation of the tower, which is situated in the top dead-centre position owing to the raising action provided precisely by inflation of the membrane tank 10.

Fig. 7 is a schematic diagram showing the progression of the righting and tilting moments [t*m] as a function of the inclination in degrees [°] of the wind tower. A nominal wind speed of 11.2 m/s and maximum wind speed of 27.8 m/s were considered in order to calculate the curves in this diagram. These curves refer to the three positions or conditions described above and therefore in the case of the platform situated in the first position or condition shown in Fig. 2, A1 is the curve for the righting moment, A2 is the nominal tilting moment and A3 is the maximum tilting moment. In the case of the platform in the second condition shown in Fig. 5, B1 is the righting moment, B2 is the nominal tilting moment and B3 is the maximum tilting movement, while in the case of the platform in the third condition shown in Fig. 6, C1 is the righting moment, C2 is the nominal tilting moment C2 and C3 is the maximum tilting moment.

In addition to that illustrated and described, the present platform will be provided with reinforced points for anchoring, winching and haulage using hoisting means, for example a crane, also under full load conditions, i.e. when completely fitted out. At least one of the radial elements 6 for connecting the cylindrical central body 5 to the floating ring 7 may be provided with a gangway for allowing access by workmen. Safety means for transit on-board the platform will also be provided, such as a handrail, life-line or the like, and the floating ring must have a mooring point for a vessel. The tower must moreover be provided with a system suitable for providing the membrane tank 10 with the necessary compressed air for the pneumatic raising and lowering movements of the wind tower.

Floating of the present platform is ensured by the keel formed by the ring 7 together with the effect provided by the wind tower in the bottom dead-centre position, shown in Fig. 5, or by the completely expanded membrane in the position shown in Fig. 6, without varying immersion of the system; in the position shown in Fig. 2 floating is ensured exclusively by the platform with a suitable variation of the immersion. During normal operation of the wind generator 2 it is envisaged that the floating platform is exposed, as mentioned, to an average wind speed of about 11.2 m/s which produces a tilting moment able to keep the system banked by about 2°. The tower and platform system may, as mentioned, be exposed to a maximum wind speed condition of 27.8 m/s. The present platform will also be provided with an automation system which will have the task, not only of monitoring and managing normal operation of the system, but also of modifying the position of the wind tower and the platform from one position to another from among those described above, for example from a normal operating position shown in Fig. 2 to a safety position shown in Fig. 5 in the case where the wind strength and/or climatic/sea conditions exceed predetermined safety values. This position adjustment results in a reduction in the area exposed to the wind and therefore a reduction of the tilting moment and a reduction in the height of the centre of gravity of the tower and platform system, thereby ensuring a better overall stability.

## Claims

1. Wind generator comprising a support platform the support platform, comprising a central body (5) provided with a seat able to be engaged with a final section (4) of a pillar (1) of a wind generator (2), a series of radial elements (6) and suitable support elements (9), position-adjusting means (10) being cooperating on the one hand with the base of said final section (4) and on the other hand with said support elements (9), said position-adjusting means (10) being able to receive and contain a given quantity of fluid and vary the height of the wind generator (2) by means of the raising or lowering of said pillar (1), **characterized in that** said central body (5) is connected by means of said series of radial elements (6) to an annular floating structure (7), and said position-adjusting means comprise at least one membrane tank (10) situated inside the central body (5) and designed to be inflated and deflated so as to raise or lower the pillar (1) of the wind generator (2), said support element (9) of said membrane tank (10) being capable of being positioned at different heights inside the central body (5) of the platform.

2. Wind generator according to Claim 1, **characterized in that** said membrane tank (10) is connected to a compressed-air supply source for inflation and deflation thereof.

3. Wind generator according to Claim 1, **characterized in that** said central body (5) is cylindrical and internally hollow and comprises in the vicinity of the bottom end an annular element (8) supporting the said position-adjusting means (10).

4. Wind generator according to Claim 1, **characterized in that** said membrane tank (10) can assume at least a normal operating condition where it is partially filled with fluid and the wind generator (2) is at an intermediate height.

5. Wind generator according to Claim 1, **characterized in that** said membrane tank (10) can assume at least one safety condition where it is totally deflated and the wind generator (2) is completely lowered.

6. Wind generator according to Claim 1, **characterized in that** said membrane tank (10) can assume at least one condition where it is totally inflated and the wind generator (2) is completely raised.

7. Wind generator according to Claim 1, **characterized in that** said final section (4) comprises ribs (11) designed to engage inside suitable grooves (12) formed in the central body (5).

8. Wind generator according to Claim 1, **characterized in that** said radial elements (6) have the same length and are equally spaced from each other and **in that** said platform is provided with suitable anchoring means

## Patentansprüche

1. Windturbine mit schwimmender Trageplattform, wobei die Trageplattform jeweils einen mittleren Körper (5) umfasst, welcher mit einem Sitz ausgestattet ist, der mit einem Endabschnitt (4) eines Pfeilers (1) einer Windturbine (2) eingerückt werden kann, eine Reihe von radialen Elementen (6) und entsprechende Tragelemente (9), wobei Stellungsjustierelemente (10) jeweils einerseits mit der Basis des genannte Endabschnitts (4) und andererseits mit den genannten Tragelementen (9) zusammenarbeiten, und die genannten Stellungsjustierelemente (10) in der Lage sind, eine bestimmte Menge Flüssigkeit aufzunehmen und zu enthalten und die Höhe der Windturbine (2) durch Anheben oder Senken des genannten Pfeilers (1) zu verändern, **dadurch gekennzeichnet, dass** der genannte mittlere Körper (5) mit Hilfe der genannten Reihe radialer Elemente (6) mit einer ringförmigen schwimmenden Struktur (7) verbunden ist, und dass die genannten Stellungsjustierelemente mindestens ein Membranbecken (10) umfassen, das sich innen im mittleren Körper (5) befindet und so ausgelegt ist, dass Luft jeweils ein- oder abgelassen werden kann, um den Pfeiler (1) der Windturbine (2) entsprechend anzuheben oder zu senken, wobei das genannte Tragelement (9) des genannten Membranbeckens (10) im Innern des mittleren Körpers (5) der Plattform jeweils in verschiedenen Höhen positioniert werden kann.

2. Eine Windturbine gemäß Anspruch 1, **dadurch gekennzeichnet, dass** das genannte Membranbecken (10) mit einem System zur Versorgung mit Druckluft zwecks deren Ein- und Ablass verbunden ist.

3. Eine Windturbine gemäß Anspruch 1, **dadurch gekennzeichnet, dass** der genannte mittlere Körper (5) zylindrisch und innen hohl ist und in der Nähe des unteren Endes ein ringförmiges Element (8) aufweist, welches die genannten Stellungsjustierselemente (10) trägt.

4. Eine Windturbine gemäß Anspruch 1, **dadurch gekennzeichnet, dass** das genannte Membranbecken (10) mindestens einen normalen Betriebszustand annehmen kann, bei dem es teilweise mit Flüssigkeit gefüllt ist und die Windturbine (2) sich demzufolge auf einer Zwischenhöhe befindet.

5. Eine Windturbine gemäß Anspruch 1, **dadurch gekennzeichnet, dass** das genannte Membranbecken (10) mindestens einen Sicherheitszustand annehmen kann, bei dem es ganz luftleer und die Windturbine (2) demzufolge ganz abgesenkt ist.

6. Eine Windturbine gemäß Anspruch 1, **dadurch gekennzeichnet, dass** das genannte Membranbecken (10) mindestens einen Zustand annehmen kann, bei dem es ganz luftgefüllt und die Windturbine (2) demzufolge ganz angehoben ist.

7. Eine Windturbine gemäß Anspruch 1, **dadurch gekennzeichnet, dass** der genannte Endabschnitt (4) Rippen (11) umfasst, die so ausgelegt sind, dass sie innen mit entsprechenden Rillen (12) einrasten, die im mittleren Körper (5) ausgebildet sind.

8. Eine Windturbine gemäß Anspruch 1, **dadurch gekennzeichnet, dass** die genannten radialen Elemente (6) jeweils die gleiche Länge aufweisen und jeweils im gleichen Abstand voneinander angeordnet sind, sowie dadurch, dass die Plattform mit entsprechenden Verankerungselementen ausgerüstet ist.

## Revendications

1. Eolienne comprenant une plateforme de support, la plateforme de support comprenant un corps central (5) muni d'un siège adapté pour être engagé avec une section finale (4) d'un pilier (1) d'une éolienne (2), une série d'éléments radiaux (6) et d'éléments de support appropriés (9), des moyens de réglage de position (10) coopérant d'une part avec la base de ladite section finale (4) et d'autre part avec lesdits éléments de support (9), lesdits moyens de réglage de position (10) étant adaptés pour recevoir et contenir une quantité donnée de fluide et faire varier la hauteur de l'éolienne (2) au moyen du soulèvement ou de l'abaissement dudit pilier (1), **caractérisée en ce que** ledit corps central (5) est connecté au moyen de ladite série d'éléments radiaux (6) à une structure flottante annulaire (7), et lesdits moyens de réglage de position comprennent au moins un réservoir à membrane (10) situé à l'intérieur du corps central (5) et conçu pour être gonflé et dégonflé de manière à soulever ou abaisser le pilier (1) de l'éolienne (2), ledit élément de support (9) dudit réservoir à membrane (10) étant adapté pour être positionné à différentes hauteurs à l'intérieur du corps central (5) de la plateforme.

2. Eolienne selon la revendication 1, **caractérisée en ce que** ledit réservoir à membrane (10) est connectée à une source d'alimentation en air comprimé pour le gonflage et le dégonflage de celui-ci.

3. Eolienne selon la revendication 1, **caractérisée en ce que** ledit corps central (5) est cylindrique et intérieurement creux et comprend à proximité de l'extrémité inférieure un élément annulaire (8) supportant lesdits moyens de réglage de position (10).

4. Eolienne selon la revendication 1, **caractérisée en ce que** ledit réservoir à membrane (10) peut assumer au moins une condition de fonctionnement normal dans laquelle il est partiellement rempli avec un fluide et l'éolienne (2) est à une hauteur intermédiaire.

5. Eolienne selon la revendication 1, **caractérisée en ce que** ledit réservoir à membrane (10) peut assumer au moins une condition de sécurité dans laquelle il est totalement dégonflé et l'éolienne (2) est complètement abaissée.

6. Eolienne selon la revendication 1, **caractérisée en ce que** ledit réservoir à membrane (10) peut assumer au moins une condition dans laquelle il est totalement gonflé et l'éolienne (2) est complètement soulevée.

7. Eolienne selon la revendication 1, **caractérisée en ce que** ladite section finale (4) comprend des nervures (11) conçues pour s'engager à l'intérieur de rainures appropriées (12) formées dans le corps central (5).

8. Eolienne selon la revendication 1, **caractérisée en ce que** lesdits éléments radiaux (6) ont la même longueur et sont espacés également l'un par rapport à l'autre et **en ce que** ladite plateforme est munie de moyens d'ancrage appropriés.
